# EUROPÄISCHE PATENTSCHRIFT

(11) **EP 0 588 337 B1**
(45) Veröffentlichungstag und Bekanntmachung des Hinweises auf die Patenterteilung: **11.04.2001**
(21) Anmeldenummer: 93114897.7
(22) Anmeldetag: 16.09.1993
(51) Int. Cl.: G11B 20/10, G11B 19/28, H04N 5/92, G11B 15/467

(54) **Verfahren zur Aufzeichnung und Wiedergabe von Daten**
Method of recording and playback of data
Procédé pour l'enregistrement et la reproduction de données

(30) Priorität: 17.09.1992 DE 4231117
(43) Veröffentlichungstag der Anmeldung: 23.03.1994
(73) Patentinhaber: DEUTSCHE THOMSON-BRANDT GMBH, 78048 Villingen-Schwenningen (DE)
(72) Erfinder: Gehringer, Reinhard, D-78176 Blumberg (DE); Kühn, Hans-Robert, D-78112 St. Georgen (DE)

(56) Entgegenhaltungen:
- EP-A- 0 137 346
- EP-A- 0 142 613
- EP-A- 0 238 194
- EP-A- 0 429 139
- EP-A- 0 463 183
- EP-A- 0 487 294
- US-A- 4 413 289

## Beschreibung

Die Erfindung betrifft ein Verfahren zur Aufzeichnung von Daten auf einen sich bewegenden Aufzeichungsträger und zur verlustlosen Wiedergabe der Daten vom Aufzeichnungsträger, wobei auf der Aufnahmeseite eine Datenkompression mit unterschiedlichem Kompressionsgrad und auf der Wiedergabeseite eine Datenexpansion vorgenommen wird.

Datenkompression und Datenexpansion werden in der Nachrichtenübertragung häufig benutzt, um z.B. die Kapazität von übertragungskanälen oder die Speicherkapazität von Aufzeichnungsträgern zu erhöhen. Beispielsweise sind die Daten auf der sogenannten Mini-Disk, einer Weiterentwicklung der Kompaktplatte, komprimiert aufgezeichnet.

Bei der Datenkompression werden die zu speichernden oder zu übertragenden Daten mittels eines geeigneten Algorithmus komprimiert. Mit anderen Worten ausgedrückt heißt dies, daß die zu übertragende bzw. zu speichernde Datenmenge reduziert wird, um die übertragungskapazität des übertragungskanals bzw. die Speicherkapazität des Aufzeichnungsträgers zu erhöhen.

Auf der Wiedergabe- bzw. Empfangsseite erzeugt ein Expander mittels des inversen Algorithmus die ursprünglichen Daten aus der reduzierten Datenmenge.

Ziel der Datenkompression ist es, wie bereits erwähnt, die Datenmenge möglichst stark zu reduzieren, ohne Datenverluste zu erzeugen, um die Übertragungskapazität eines übertragungskanals oder die Speicherkapazität eines Aufzeichnungsträgers besser nutzen zu können.

Es ist bekannt, bei der Datenaufzeichung die aufzuzeichnenden Daten vor der Aufzeichnung in einen Zwischenspeicher zu lesen. Ebenso ist es bekannt, bei der Datenwiedergabe die Daten vor der Wiedergabe zuerst in einen Zwischenpeicher zu lesen. Wenn der Zwischenspeicher jedoch überläuft, kommt es zu Datenverlusten sowohl bei der Aufzeichnung als auch bei der Datenwiedergabe. Um diese Datenverluste gering zu halten, werden bei der Aufzeichung der Daten zunächst die wichtigsten Bits mittels des Algorithmus erzeugt und gespeichert, so daß die weniger wichtigen Bits, welche zur Regenerierung des ursprünglichen Datensignals nicht mehr viel beitragen, zuletzt gespeichert werden oder eben bei überlauf des Zwischenspeichers verloren gehen. Im letzten Fall ist eine verlustlose Aufzeichung der Daten nicht mehr möglich.

Es ist auch aus US 4 413 289 bekannt den Füllstand dieses Zwischenspeichers als Regelgröße für die Mediumgeschwindigkeit zu benutzen.

Ähnlich werden beim Auslesen der Daten zuerst die wichtigsten Bits ausgelesen und zuletzt diejenigen Bits, die zur Regenerierung des ursprünglichen Datensignals keine wesentlichen Beiträge mehr liefern. Auch hier gibt es bei überlauf des Zwischenspeichers Datenverluste, weil die weniger bedeutenden Bits durch den überlauf verloren gehen.

Um Datenverluste durch überlauf des Zwischenspeichers zu vermeiden, sind Zwischenspeicher mit genügend großer Speicherkapazität erforderlich.

Es ist nun Aufgabe der Erfindung, ein Verfahren zur verlustlosen Aufzeichnung und Wiedergabe komprimierter Daten so zu gestalten, daß die Speicherkapazität des Aufzeichnungsträgers wirkungsvoller als beim Stand der Technik ausgeschöpft wird.

Die Erfindung löst diese Aufgabe durch die Merkmale der Ansprüche 1 und 6.

Es zeigen
- Figur 1: ein erstes Ausführungsbeispiel der Erfindung bei der Aufzeichnung von Daten auf einen plattenförmigen Aufzeichnungsträger
- Figur 2: das erste Ausführungsbeispiel bei der Wiedergabe von Daten von einem plattenförmigen Aufzeichnungsträger
- Figur 3: ein zweites Ausführungsbeipiel der Erfindung bei der Aufzeichnung von Daten auf einen plattenförmigen Aufzeichnungsträger
- Figur 4: das zweite Ausführungsbeispiel bei der Wiedergabe von Daten von einem plattenförmigen Aufzeichnungsträger.

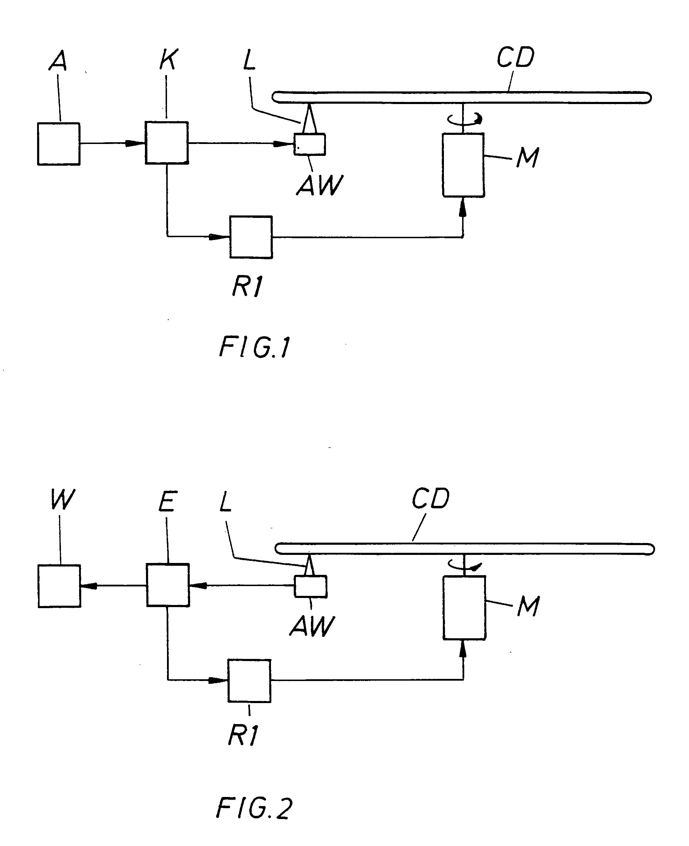

Anhand des in der Figur 1 gezeigten ersten Ausführungsbeispieles wird nun das erfindungsgemäße Verfahren beim Aufzeichnen von Daten erläutert.

Eine Datenaufzeichnungseinrichtung A, die als Quelle digitaler Daten dient, liefert die aufzuzeichnenden Daten in digitaler Form in einem festgelegten Zeitraster an einen Kompressor K, der die Daten nach einem vorgebbaren Algorithmus komprimiert. Die komprimierten Daten werden auf einem Aufzeichnungsträger aufgezeichnet. Als Beispiel für den Aufzeichungsträger ist in der Figur 1 eine magneto-optische Platte CD gezeigt, die von einem Motor M gedreht wird. Die Daten werden mittels eines Lichtstrahls L auf der Platte CD aufgezeichnet, den ein Aufzeichnungs- und Wiedergabekopf AW, bei CD-Spielern im allgemeinen Pick-Up genannt, erzeugt. Ein Steuerausgang des Kompressors K ist mit dem Eingang eines Reglers R1 verbunden, der die Drehzahl des Motors M regelt.

Bei einem CD-Spieler werden die Daten mit konstanter Bahngeschwindigkeit aufgezeichnet und wiedergegeben. Man spricht deshalb von einem Constant-Linear-Velocity-System - abgekürzt CLV-System - im Gegensatz zu einem Constant-Angular-Velocity-System, abgekürzt CAV-System, bei dem die Daten mit konstanter Winkelgeschwindigkeit aufgezeichnet und wiedergegeben werden. Wie bereits erwähnt können nun Datenverluste auftreten, wenn der Zwischenspeicher überläuft.

Die Erfindung sieht nun vor, die Geschwindigkeit des Aufzeichungsträgers CD in Abhängigkeit vom Kompressionsgrad zu regeln. Bei hohem Kompressionsgrad wird die Geschwindigkeit der Platte sowohl bei der Aufnahme als auch bei der Wiedergabe der Daten verringert, während sie bei niederem Kompressionsgrad erhöht wird. Durch die Maßnahme, bei hohem Kompressionsgrad von der Normgeschwindigkeit abweichend die Geschwindigkeit des Aufzeichnungsträgers zu verringern, wird die Speicherkapazität des Aufzeichnungsträgers beträchtlich erhöht.

Der Regler R1 regelt die Drehzahl der Platte CD in Abhängigkeit vom jeweils augenblicklichen Kompressionsgrad des Kompressors K. Es ist z.B. sinnvoll, die Drehzahl der Platte CD umgekehrt proportional zum Kompressionsgrad zu regeln. Bei diesem Verfahren ist ein Zwischenspeicher nicht unbedingt erforderlich, um Datenverluste zu vermeiden.

Dieses erste Ausführungsbeispiel ist jedoch nicht Teil der Erfindung.

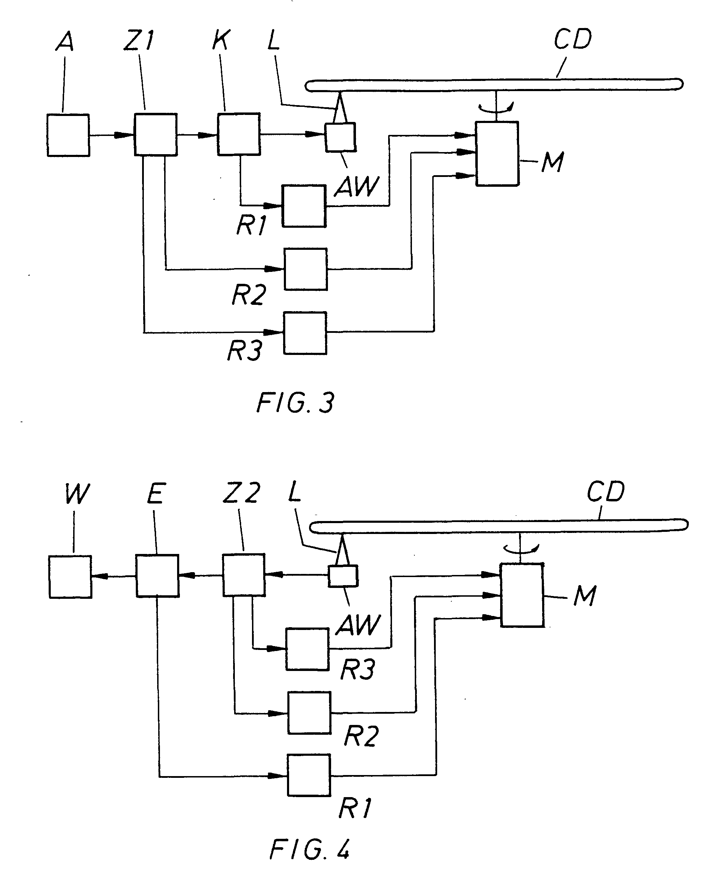

Beim zweiten Ausführungsbeispiel der Erfindung, das in den Figuren 3 und 4 gezeigt ist, sind ein Zwischenspeicher sowie neben dem ersten Regler noch ein zweiter und ein dritter Regler vorgesehen.

Bei der Aufzeichnung der Daten, die in der Figur 3 dargestellt ist, liefert die Datenaufzeichnungseinrichtung A digitale Daten an einen Zwischenspeicher Z1, der sie nach Zwischenspeicherung an den Kompressor K zum Komprimieren weiterleitet. Mittels des vom Aufzeichnungs- und Wiedergabekopf AW erzeugten Lichtstrahls L werden die komprimierten Daten auf der Platte CD aufgezeichnet. Ein Steuerausgang des Kompressors K ist mit dem Eingang eines ersten Reglers R1 verbunden, der zusammen mit einem zweiten Regler R2 und einem dritten Regler R3 die Drehzahl des Motors M regelt, der die Platte CD dreht.

Der zweite Regler R2 ist mit dem ersten Steuerausgang des Zwischenspeichers Z1 verbunden. Der erste Regler R1 regelt die Drehzahl der Platte CD wie beim ersten Ausführungsbeispiel in Abhängigkeit vom Kompressionsgrad des Kompressors K. Der zweite überlagerte Regelkreis mit dem Regler R2 regelt die Drehzahl der Platte CD in Abhängigkeit vom Füllstand des Zwischenspeichers Z1. Ist der Zwischenspeicher Z1 voll oder nahezu voll, so wird die Drehzahl der Platte CD erhöht, um ein überlaufen des Zwischenspeichers Z1 zu verhindern; ist dagegen der Zwischenspeicher leer oder weitgehend leer, so wird die Drehzahl der Platte CD erniedrigt, um den Zwischenspeicher mit Daten aufzufüllen.

Mittels des dritten Reglers R3 wird aus der Differenz von Datenzufluß DZ und Datenabfluß DA beim Zwischenspeicher Z1 eine dritte Regelgröße zur Regelung der Drehzahl der Platte CD erzeugt. Wenn die Differenz DZ - DA positiv ist, wird die Drehzahl der Platte CD erhöht, um ein überlaufen des Zwischenspeichers Z1 zu vermeiden, während im Falle negativer Differenz DZ - DA die Drehzahl erniedrigt wird, um den Zwischenspeicher Z1 wieder mit Daten aufzufüllen.

Es ist nun möglich, nur einen der zwei Regler R2 und R3 zusätzlich zu R1 oder alle 3 Regler zur Regelung der Drehzahl der Platte CD vorzusehen. Insgesamt sind 3 Kombinationen möglich.

In der Figur 4 ist das zweite Ausführungsbeispiel für den Fall der Datenwiedergabe abgebildet.

Die Daten werden von der Platte CD mittels des Lichtstrahls L des Aufzeichnungs- und Wiedergabekopfes AW gelesen und an den Expander E gegeben, der sie weiter zu einem Zwischenspeicher Z2 leitet. Vom Zwischenspeicher Z2 gelangen die Daten an eine Datenwiedergabevorrichtung W, z.B. einen Lautsprecher.

Der Regler R1, der mit dem Steuerausgang des Expanders E verbunden ist, regelt die Drehzahl der Platte CD in Abhängigkeit vom Kompressionsgrad. Bei hohem Kompressionsgrad wird die Drehzahl von der Normdrehzahl verringert, bei geringem dagegen wieder auf die Normdrehzahl erhöht.

Der zweite Regler R2 regelt die Drehzahl der Platte CD in Abhängigkeit vom Füllstand des Zwischenspeichers Z2. Bei hohem Füllstand bewirkt er eine Verringerung der Drehzahl, um ein überlaufen des Zwischenspeichers Z2 zu verhindern, während er bei geringem Füllstand die Drehzahl erhöht, um ein Leerlaufen des Zwischenspeichers Z2 zu vermeiden.

Der dritte Regler R3 wertet die Differenz DZ - DA aus dem Datenzufluß DZ und dem Datenabfluß DA aus. Fließen mehr Daten in den Zwischenspeicher Z2 als wieder an die Wiedergabeeinrichtung W abfließen, DZ - DA ist dann positiv, so wird die Drehzahl verringert, damit der Zwischenspeicher Z2 nicht überläuft. Erhält der Zwischenspeicher Z2 dagegen weniger Daten vom Aufzeichungs- und Wiedergabekopf AW als er an die Datenwiedergabeeinrichtung W abgibt, so erhöht der Regler R3 die Drehzahl, um den Zwischenspeicher Z2 wieder mit Daten aufzufüllen. Auch bei der Datenwiedergabe ist es möglich, nur einen, zwei oder alle drei Regler einzusetzen. Jede denkbare Kombination ist möglich.

Die Erfindung ist jedoch keineswegs auf plattenförmige Aufzeichnungsträger beschränkt. Neben CD-Spielern, magneto-optischen Aufzeichungs- und Wiedergabegeräten, die mit Platten als Speichermedium arbeiten, kommen auch Bandgeräte für die Erfindung in Frage. Auch eine Walze ist als Aufzeichnungsträger beispielsweise geeignet.

Die Art der Daten ist beliebig. Es kann sich z.B. um die Audiodaten bei einem CD-Spieler, die Audio- und Bilddaten eines Videoplattenspielers oder um die Daten in einer elektronischen Datenverarbeitungsanlage handeln. Entscheidend ist nur, daß es sich um komprimierte Daten handelt, die auf einem Aufzeichnungsträger gespeichert werden bzw. gespeichert sind, der sich bewegt, wie z.B. eine rotierende Platte oder ein linear bewegtes Band.

## Patentansprüche

1. Verfahren zur Aufzeichnung von Daten auf einen Aufzeichnungsträger (CD) und/oder zur verlustlosen Wiedergabe vom Aufzeichnungsträger (CD), wobei auf der Aufnahmeseite eine Kompression der Raten mit unterschiedlichem Kompressionsgrad bzw. auf der Wiedergabeseite eine Expansion vorgenommen wird und die Geschwindigkeit des Aufzeichnungsträgers (CD) bei der Datenaufnahme bzw. der Datenwiedergabe auf variable Werte geregelt wird, **dadurch gekennzeichnet,**
daß die Regelung der Geschwindigkeit bei der Aufnahme in Abhängigkeit eines von einem Kompressor (K) bzw. bei der Wiedergabe in Abhängigkeit eines von einem Expander (E) abgegebenen Wertes des Kompressionsgrads erfolgt,
daß die aufzuzeichnenden Daten vor der Aufzeichnung in einem ersten Zwischenspeicher (Z1) gespeichert werden, daß die vom Aufzeichnungsträger (CD) gelesenen Daten vor der Wiedergabe in einem zweiten Zwischenspeicher (Z2) gespeichert werden, und
daß die Geschwindigkeit des Aufzeichnungsträgers (CD) zusätzlich in Abhängigkeit vom Füllstand des ersten Zwischenspeichers (Z1) bei der Aufnahme bzw des zweiten Zwischenspeichers (Z2) bei der Wiedergabe geregelt wird.

2. Verfahren nach Anspruch 1, **dadurch gekennzeichnet,** daß bei hohem Kompressionsgrad der Daten die Geschwindigkeit des Aufzeichnungsträgers (CD) geringer gewählt ist als bei niederem Kompressionsgrad.

3. Verfahren nach Anspruch 1 oder 2, **dadurch gekennzeichnet**, daß bei der Datenaufnahme die Geschwindigkeit des Aufzeichnungsträgers (CD) bei hohem Füllstand des ersten Zwischenspeichers (Z1) erhöht wird, während sie bei geringem Füllstand erniedrigt wird, daß bei der Datenwiedergabe bei hohem Füllstand des zweiten Zwischenspeichers (Z2) die Geschwindigkeit des Aufzeichnungsträgers (CD) erniedrigt wird, während sie bei niederem Füllstand erhöht wird.

4. Verfahren nach Anspruch 3, **dadurch gekennzeichnet,** daß die Geschwindigkeit des Aufzeichungsträgers (CD) zusätzlich in Abhängigkeit von der Differenz (DZ - DA) des Datenzuflusses (DZ) und des Datenabflusses (DA) geregelt wird.

5. Verfahren nach Anspruch 4, **dadurch gekennzeichnet,** daß bei der Datenaufnahme die Geschwindigkeit des Aufzeichungsträgers (CD) erhöht wird, wenn der Datenzufluß (DZ) beim ersten Zwischenspeicher (Z1) größer ist als der Datenabfluß(DA), während die Geschwindigkeit des Aufzeichungsträger (CD) verringert wird, wenn beim ersten Zwischenspeicher (Z1) der Datenzufluß (DZ) kleiner ist als der Datenabfluß (DA), daß bei der Datenwiedergabe die Geschwindigkeit des Aufzeichnungsträgers (CD) erhöht wird, wenn der Datenzufluß(DZ)beim zweiten Zwischenspeicher (Z2) kleiner ist als der Datenabfluß (DA), während die Drehzahl erniedrigt wird, wenn der Datenzufluß (DZ) des zweiten Zwischenspeichers (Z2) größer ist als der Datenabfluß (DA).

6. Gerät zur Aufzeichnung von Daten auf einen Aufzeichnungsträger (CD) und/oder zur verlustlosen Wiedergabe vom Aufzeichnungsträger (CD), mit einem Kompressor (K) zur Kompression der Daten mit unterschiedlichem Kompressionsgrad auf der Aufnahmeseite bzw. einem Expander (E) zur Expansion auf der Wiedergabeseite und einem Regler (R1) zur Regelung der Geschwindigkeit des Aufzeichnungsträgers (CD) bei der Datenaufnahme bzw. der Datenwiedergabe auf variable Werte, **dadurch gekennzeichnet,** daß ein Eingang des Reglers (R1) mit einem ein dem augenblicklichen Kompressionsgrad entsprechendes Steuersignal abgebenden Steuerausgang des Kompressors (K) bzw. des Expanders (E) verbunden ist, daß jeweils ein Zwischenspeicher (Z1;Z2) vorhanden ist, in dem die Daten vor der Aufzeichnung bzw. vor der Wiedergabe gespeichert werden und daß ein Regler (R2,R3) zur Regelung der Geschwindigkeit des Aufzeichnungsträgers (CD) in Abhängigkeit vom Füllstand des jeweiligen Zwischenspeichers (Z1,Z2) vorhanden ist.

## Claims

1. Method of recording items of data on a recording medium (CD) and/or for a lossless reproduction from the recording medium (CD) wherein a compression of the items of data using different degrees of compression is undertaken at the recording end and an expansion process is effected at the reproduction end, respectively, and the speed of the recording medium (CD) is controlled to variable values during the recording of the data and during the reproduction of the data, respectively,
characterised in that,
the control of the speed occurs in dependence on the level of degree of compression delivered during recording by a compressor (K) and delivered during reproduction by an expander (E), respectively,
that the items of data that are to be recorded are stored in a first buffer store (Z1) prior to the recording process,
that the items of data read from the recording medium (CD) are stored in a second buffer store (Z2) prior to the reproduction process and
that the speed of the recording medium (CD) additionally is controlled in dependence on the level to which the first buffer store (Z1) is filled during recording and to which the second buffer store (Z2) is filled during reproduction, respectively.

2. Method in accordance with claim 1, characterised in that, the speed of the recording medium (CD) is selected to be smaller in the case of a high degree of compression of the items of data than for a lower degree of compression.

3. Method in accordance with claim 1 or 2, characterised in that, during the recording of the data the speed of the recording medium (CD) is increased when the level to which the first buffer store (Z1) is filled is high whilst it is decreased when the level to which it is filled is low, that during the reproduction of the data, the speed of the recording medium (CD) is decreased when the level to which the second buffer store (Z2) is filled is high whilst it is increased when the level to which it is filled is lower.

4. Method in accordance with claim 3, characterised in that, the speed of the recording medium (CD) is controlled additionally in dependence on the difference (DZ - DA) between the inflow of data (DZ) and the outflow of data (DA).

5. Method in accordance with claim 4, characterised in that, during the recording of the data, the speed of the recording medium (CD) is increased when the inflow of data DZ at the first buffer store (Z1) is greater than the outflow of data (DA), whilst the speed of the recording medium (CD) is lowered when the inflow of data (DZ) at the first buffer store (Z1) is lower than the outflow of data DA, that during the reproduction of the data, the speed of the recording medium (CD) is increased when the inflow of data (DZ) at the second buffer store (Z2) is lower than the outflow of data (DA), whilst the rotational speed is decreased when the inflow of data (DZ) to the second buffer store (Z2) is greater than the outflow of data (DA).

6. Apparatus for recording items of data on a recording medium (CD) and/or for a lossfree reproduction from the recording medium (CD), including a compressor (K) for compression of the items of data with different degree of compression at the recording end and an expander (E) for expansion at the reproduction end, respectively, and further including a regulator (R1) for regulation of the speed of the recording medium (CD) during recording of items of data and reproduction of data, respectively, to variable values,
characterised in that
an input of the regulator (R1) is connected to a control output of the processor (K) and the expander (E), respectively, providing a control signal corresponding to the current degree of compression, that in each case a buffer store (Z1, Z2) is provided wherein the item of data are stored prior to recording and reproduction, respectively, and that a regulator (R2, R3) is provided for controlling the speed of the recording medium (CD) in dependence on the level of the respective buffer store (Z1; Z2).

## Revendications

1. Procédé d'enregistrement de données sur un support d'enregistrement (CD) et/ou de reproduction de données à partir du support d'enregistrement (CD) sans perte de données, pour lequel une compression de données est effectuée, lors de l'enregistrement, à un niveau de compression différent, ou pour lequel une décompression de données est effectuée lors de la reproduction et la vitesse du support d'enregistrement (CD), lors de l'enregistrement ou de la reproduction des données, est ajustée sur des valeurs variables, **caractérisé en ce que** le réglage de la vitesse s'effectue en fonction d'une valeur indiquée par un système de compression (K) lors de l'enregistrement, ou en fonction d'une valeur indiquée par un système de décompression (E) lors de la reproduction, **en ce que** les données à enregistrer sont stockées dans une première mémoire tampon (Z1) avant l'enregistrement, **en ce que** les données lues à partir du support d'enregistrement (CD) sont stockées dans une deuxième mémoire tampon (Z2) avant la reproduction, **et en ce que** la vitesse du support d'enregistrement (CD) est en outre ajustée en fonction du niveau de la première mémoire tampon (Z1) lors de l'enregistrement, ou de la deuxième mémoire tampon (Z2) lors de la reproduction.

2. Procédé conforme à la revendication 1, **caractérisé en ce que** la vitesse du support d'enregistrement (CD) est abaissée lorsque le niveau de compression est élevé, contrairement à un niveau de compression bas.

3. Procédé conforme à la revendication 1 ou 2, **caractérisé en ce que**, lors de l'enregistrement des données, la vitesse du support d'enregistrement (CD) est augmentée en cas de niveau élevé de la première mémoire tampon (Z1), alors qu'elle est abaissée en cas de niveau faible, en ce que, lors de la reproduction des données, la vitesse du support d'enregistrement (CD) est abaissée en cas de niveau élevé de la deuxième mémoire tampon (Z2), alors qu'elle est augmentée en cas de niveau faible.

4. Procédé conforme à la revendication 3, **caractérisé en ce que** la vitesse du support d'enregistrement (CD) est en outre ajustée en fonction de la différence entre DZ et DA, c'est-à-dire entre l'afflux de données (DZ) et l'écoulement de données (DA).

5. Procédé conforme à la revendication 4, **caractérisé en ce que** la vitesse du support d'enregistrement (CD) est augmentée lors de l'enregistrement des données si l'afflux de données (DZ) est supérieur à l'écoulement de données (DA) dans la première mémoire tampon (Z1), alors que la vitesse du support d'enregistrement (CD) est diminuée si l'afflux de données (DZ) est inférieur à l'écoulement de données (DA) dans la première mémoire tampon (Z1), **en ce que** la vitesse du support d'enregistrement (CD) est augmentée lors de la reproduction des données si l'afflux de données (DZ) est inférieur à l'écoulement de données (DA) dans la deuxième mémoire tampon (Z2), alors que le nombre de tours est diminué si l'afflux de données (DZ) est supérieur à l'écoulement de données (DA) dans la deuxième mémoire tampon (Z2).

6. Procédé d'enregistrement de données sur un support d'enregistrement (CD) et/ou de reproduction de données à partir du support d'enregistrement (CD) sans perte de données, équipé d'un dispositif de compression (K) effectuant une compression des données, lors de l'enregistrement, à un niveau de compression différent, ou équipé d'un dispositif de décompression (E) effectuant une décompression des données, lors de la reproduction, et équipé d'un système de réglage (R1) permettant d'ajuster sur des valeurs variables la vitesse du support d'enregistrement (CD) lors de l'enregistrement ou de la reproduction des données, **caractérisé en ce qu'**une entrée du système de réglage (R1) est reliée à une sortie de commande du dispositif de compression (K) ou de décompression (E), délivrant un signal de commande correspondant au niveau de compression instantané, **en ce qu**'une mémoire tampon (Z1, Z2) stocke les données avant l'enregistrement ou avant la reproduction **et en ce qu**'un mécanisme régulateur (R2, R3) permet de régler la vitesse du support d'enregistrement (CD) en fonction du niveau de la mémoire tampon (Z1, Z2) respective.
